# EUROPEAN PATENT SPECIFICATION

(11) **EP 3 294 484 B1**
(45) Date of publication and mention of the grant of the patent: **17.01.2024**
(21) Application number: 15747847.0
(22) Date of filing: 13.05.2015
(51) Int. Cl.: B23C 3/35, B23B 31/16

(54) **APPARATUS AND METHOD FOR MACHINING A KEY**
VORRICHTUNG UND VERFAHREN ZUR BEARBEITUNG EINES SCHLÜSSELS
APPAREIL ET PROCÉDÉ D'USINAGE DE CLÉ

(43) Date of publication of application: 21.03.2018
(73) Proprietor: CLEVERTECH S.p.A., 42023 Cadelbosco di Sopra (RE) (IT)
(72) Inventor: REGGIANI, Giuseppe, 42049 Sant'Ilario d'Enza (Reggio Emilia) (IT); CORRADI, Cesare, 42023 Cadelbosco di Sopra (Reggio Emilia) (IT)
(74) Representative: Monelli, Alberto
(86) International application number: PCT/IT2015/000128
(87) International publication number: WO 2016/181416

(56) References cited:
- EP-A1- 1 698 429
- WO-A1-2012/159965
- DE-A1- 3 346 689
- DE-A1- 10 341 627
- DE-C- 38 197
- FR-A5- 2 110 582
- JP-U- S5 455 587
- US-A- 4 796 900

## Description

### Technical field

The present invention relates to an apparatus and a method for machining a key, used for example in motor vehicles. It preferably pertains to double track keys.

### State of the art

There is a known apparatus for shaping a key from a substantially parallelepiped body and fashioning therein a plurality of grooves that enable one key to be differentiated from another (thus enabling the opening only of the corresponding lock).

There is a known device for making such a key which comprises jaws that translate horizontally and grip the key, positioning it close to a vertical plane that serves as a reference for the machining performed by numeric control machine tools, in particular for performing the milling operations that define the grooves in the key.

One drawback of this constructive solution is tied to the fact that if extremely rigid shape tolerances are required, such machining is not always capable of complying with them. In particular, taking as reference a plane which a surface of the key comes up against, it would be possible to make keys that can perform their action only if inserted according to a first orientation (and which do not work if they are inserted with a second orientation rotated by 180° relative to the rotation axis of the key).

A method for machining a key is disclosed in EP1698429 and a workpieceholding assembly for a chuck is disclosed in US4796900.

### Object of the invention

In this context, the technical task at the basis of the present invention is to propose an apparatus and a method for machining a key which enable very rigid dimensional and shape tolerances to be satisfied.

The stated technical task and specified objects are substantially achieved by an apparatus and a method comprising the technical features disclosed in one or more of the appended claims.

### Brief description of the drawings

Additional features and advantages of the present invention will become more apparent from the approximate and thus non-limiting description of a preferred but not exclusive embodiment of a device and method as illustrated in the appended drawings, in which:
- figure 1 shows a perspective view of an apparatus according to the present invention;
- figure 2 shows a detail of figure 1;
- figure 3 shows a perspective view exemplifying a key obtainable by means of the apparatus and method according to the present invention;
- figure 3a shows a sectional view according to the plane A of figure 3;
- figure 4 shows a front view of the apparatus of figure 1;

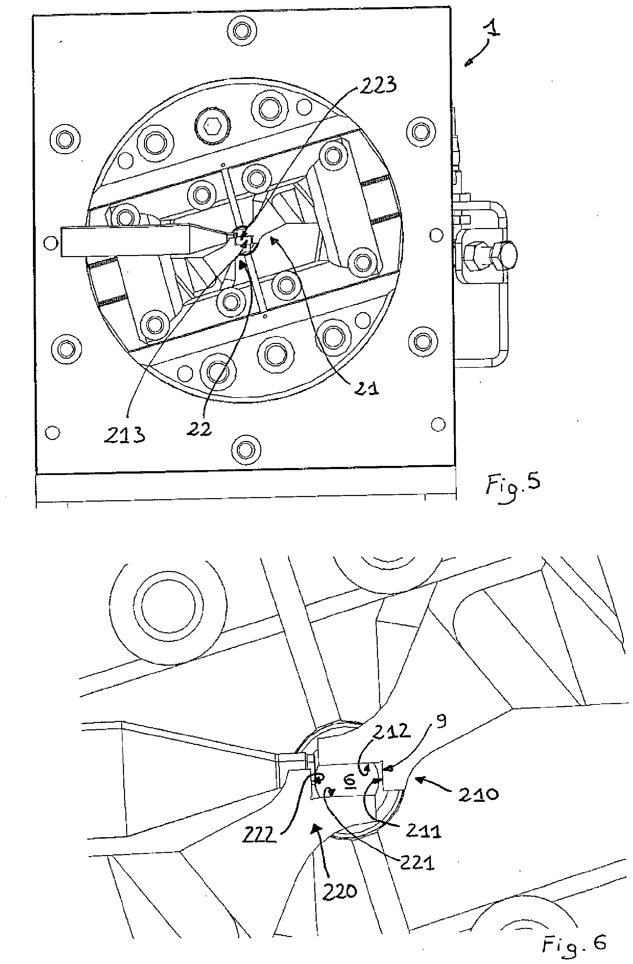

- figures 5 and 6 show enlargements of figure 4;

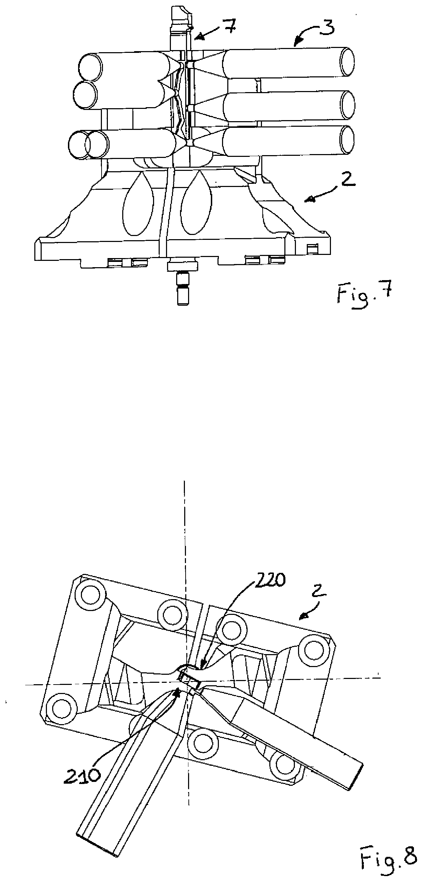

- figures 7 and 8 show several components of the apparatus of figure 1 and the key being machined from different points of view.

### Detailed description of preferred embodiments of the invention

In the appended figures, the reference number 1 denotes an apparatus for machining a key. The apparatus 1 comprises a vice 2 for gripping the key. The vice 2 is self-centring. The vice 2 in turn comprises a first jaw 21 and a second jaw 22 which cooperate in order to hold the key in position. By way of example, but not necessarily, the first jaw 21 could be a monobloc (a single monolithic piece). Analogously, by way of non-limiting example, the second jaw 22 could be a monobloc (a single monolithic piece). Advantageously, the self-centring vice 2 is a vice with only two jaws. The jaws grasp the key, abutting against it at the top, bottom and on two opposite lateral flanks.

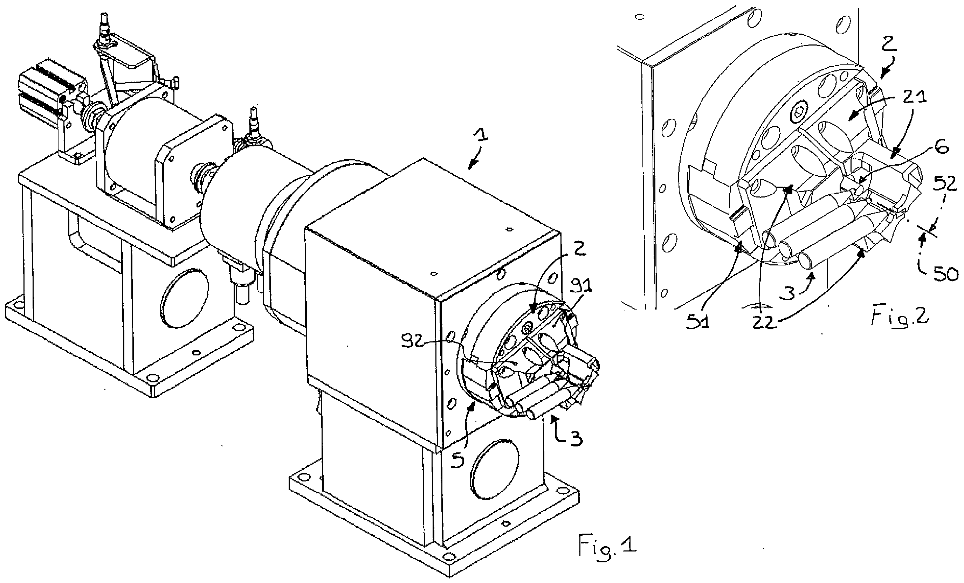

The apparatus 1 further comprises a means 3 for shaping the profile of the key. Conveniently, the shaping means 3 comprises a milling cutter, in particular with numerical control. Figure 2 illustrates different positions taken on by the milling cutter during machining.

The first jaw 21 comprises a first and a second face 211, 212 for positioning the key which respectively identify a first and a second reciprocally transverse (preferably orthogonal) imaginary plane. The first and second faces 211, 212 of the first jaw 21 are two flat faces.

In particular the first jaw 21 comprises a first angled portion 210. The first and second faces 211, 212 of the first jaw 21 are part of the first angled portion 210. Conveniently, the first and second faces 211, 212 of the first jaw define two transverse (preferably orthogonal) surfaces intended to come into contact with the key. The first jaw 21 comprises an area of reciprocal connection of the first and second faces 211, 212, wherein a relief groove is advantageously present. Advantageously, the first and second faces 211, 212 of the first jaw are at least in part integrated, respectively, in a first and a second tab for securing the key. In the preferred embodiment, the first jaw 21 comprises a support 91 from which said first angled portion 210 (which forms an arm of the support 91) projects in cantilever fashion.

The second jaw 22 comprises a first and a second face 221, 222 for positioning the key which respectively identify a third and a fourth reciprocally transverse (preferably orthogonal) imaginary plane. Conveniently, the first and second jaws 21, 22 can be simultaneously moved nearer along a first direction 4, which forms an acute, non-zero angle with the first, second, third and fourth imaginary planes.

The second jaw 22 comprises a second angled portion 220. The first and second faces 221, 222 of the second jaw 22 are part of said second angled portion 220.

Conveniently, the first and second positioning faces 221, 222 define two transverse (preferably orthogonal) surfaces intended to come into contact with the key. These two surfaces identify an area of reciprocal connection wherein a relief groove is advantageously present. Advantageously, the first and second faces 221, 222 for positioning the key are part, respectively, of a third and a fourth tab for securing the key.

In the preferred embodiment, the second jaw 22 comprises a support structure 92 from which said second angled portion 220 (which forms an arm of the support structure 92) projects in cantilever fashion.

The first and second jaws 21, 22 can be moved simultaneously nearer along a first direction 4. Advantageously, the first direction 4 forms a non-zero acute angle with a horizontal plane. Acute angle means an angle of less than 90 degrees.

The apparatus 1 comprises a means for guiding the first and second jaws which enables (preferably imposes) a translation of the first and second jaws 21, 22 along the first direction 4.

The first and second angled portions 210, 220 respectively define a first and a second concavity 213, 223. The first and second concavities 213, 223 in combination define a seat 9 for accommodating the key. Such seat 9 for accommodating the key is advantageously parallelepiped. The first concavity 213 is turned towards the second angled portion 220 and the second concavity 223 is turned towards the first angled portion 210.

The first and second jaws 21, 22 comprise a first and a second part intended to extend along a longitudinal extent of the key.

As compared to the first part, in the second part the first and second faces 211, 212 of the first jaw 21 and the first and second faces 221, 222 of the second jaw 22 are designed to overlap the perimeter of corresponding transverse sections of the key to a greater extent. In particular, in said first part, the first and second jaws hold the key only at two opposite edges thereof; in the second portion the first and second jaws 21, 22 each comprise a pair of orthogonal tabs intended to wrap around at least 70% of the key (improving the hold and preventing it from flipping over).

The positioning of the key by means of a vice 2 comprising two angled portions that both exploit two transverse surfaces enables a precise positioning of the axis of longitudinal extension of the key, which can thus be taken as a reference for achieving a precise machining of the same.

Advantageously, the apparatus 1 comprises a support head 5 for supporting the first jaw 21. Conveniently, the support head 5 is also a support head for the second jaw 22. Conveniently, the support head 5 is rotatable about a horizontal rotation axis 50 which is orthogonal to the first direction 4. The first and/or the second jaw 21, 22 are removably connected to the support head 5. This enables them to be replaced with others of a different geometry so as to permit a stable positioning of keys that must assume a different shape.

Advantageously, the apparatus 1 comprises a feeler 6 for detecting the insertion of the key in the self-centring vice 2. Advantageously, the feeler 6 activates at least a part of the means 3 for shaping the key.

The feeler 6 is movable between:
- a first position of waiting for the key to be machined;
- a second retracted position, assumed upon the positioning of the key to be machined in the self-centring vice 2; conveniently, in the second position the feeler 6 is pushed by the key;
- a third further retracted position in order not to obstruct the action of the means 3 for shaping the key.

Advantageously, the movement of the feeler 6 between the first, second and third positions takes place along a first straight line 52.

Conveniently, the movement of the feeler 6 from the second to the third position is motorized.

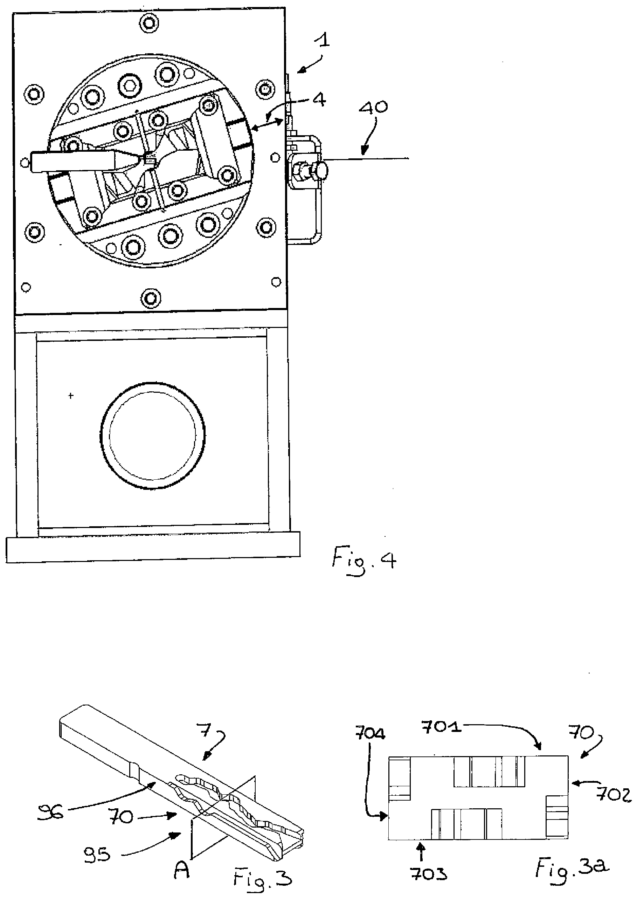

The subject matter of the present invention also relates to a method for machining a key. Preferably, the key is a two-track key, for example of the type used for motor vehicles. An example is illustrated in figure 3. It shows an originally parallelepiped shank that is modified with a series of cuts fashioned in the four orthogonal faces. Advantageously, this method is implemented by an apparatus 1 having one or more of the features described previously.

The method comprises the steps of:
- positioning a key 7 to be machined in a self-centring vice 2 comprising a first and a second jaw 21, 22;
- shaping the profile of the key 7 (this step typically entails making millings on the key).

Typically, the step of positioning the key to be machined in the vice entails picking up the key from an accumulator. Positioning in the vice takes place, advantageously, by means of a mobile arm.

The step of positioning the key 7 to be machined in the self-centring vice 2 comprises the step of clamping a first portion 70 of the key 7 between the first and second jaws 21, 22. Conveniently, this takes place by simultaneously moving the first and second jaws 21, 22 nearer. The nearing takes place along a first direction 4 which forms a non-zero acute angle with a horizontal plane.

Conveniently, the first and second jaws slide along guide means present on the support head 5.

The step of clamping the first portion 70 of the key 7 entails moving the first and second jaws nearer as to:
- position a first and a second face 701, 702 of said first portion 70 of the key in contact, respectively, with a first and a second face 211, 212 of the first jaw 21; the first and second faces 701, 702 of the first portion 70 are reciprocally transverse, preferably orthogonal;
- positioning a third and a fourth face 703, 704 of said first portion 70 in contact, respectively, with a first and a second face 221, 222 of the second jaw 22; the third and the fourth face 703, 704 of the first portion 70 are transverse, preferably orthogonal.

Conveniently, the first direction 4 forms a non-zero acute angle with both the first and second faces 211, 212 of the first jaw 21 and the first and second faces 221, 222 of the second jaw 22.

The first portion 70 of the key (i.e. the portion that is clamped by the vice 2) is substantially parallelepiped. The first and second faces 211, 212 of the first jaw 21 are fashioned, respectively, on two orthogonal areas of a first angled portion 210 of the first jaw 21.

The two orthogonal areas preferably identify two surfaces that are connected at a relief groove.

Analogously, the first and second faces 221, 222 of the second jaw 22 are fashioned, respectively, on two orthogonal areas of a second angled portion 220.

Conveniently, the first and second jaws 21, 22 are symmetrical.

Preferably, the positioning of the key 7 to be machined in the vice 2 takes place by positioning two faces 701, 703 of the first parallelepiped portion 70 horizontally and the other two faces 702, 704 of the first parallelepiped portion 70 vertically.

The steps of positioning a first and a second face 701, 702 of said first portion 70 of the key in contact, respectively, with a first and a second face 211, 212 of the first jaw 21 and of positioning a third and a fourth face 703, 704 of said first portion 70 in contact, respectively, with a first and a second face 221, 222 of the second jaw 22 envisage that:
- along a first part 95 of the longitudinal extent of the key, the first and second faces 211, 212 of the first jaw 21 and the first and second faces 221, 222 of the second jaw 22 hold the key 7 at two opposite edges of said first portion 70 of the key;
- along a second part 96 of the longitudinal extent of the key, the first and second faces 211, 212 of the first jaw 21 and the first and second faces 221, 222 of the second jaw 22 hold the key by overlapping at least 70% of the perimeter of a transverse section of the first portion 70 of the key. Preferably, in such a case the first portion 70 (at least prior to machining) is substantially parallelepiped.

Preferably, the method comprises a step of setting the subsequent step of shaping the profile of the key. The setting step of comprises the step of rotating a support head 5 of the first and second jaws 21, 22. Conveniently, the support head 5 is rotatable about a rotation axis 50 which is orthogonal to the first direction 4. Preferably, the rotation axis is horizontal.

During said step of positioning the key to be machined in the self-centring vice 2, the insertion of the key in the vice is detected by a sensor, this enabling the step of shaping the profile of the key. The sensor is preferably a feeler 6.

The step of positioning a key to be machined in a self-centring vice 2 induces a push on said sensor by one end of the key. This brings about:
- a retreat of said sensor so as not to be an obstacle in the subsequent step of shaping the profile of the key;
- an enabling of the step of shaping the profile of the key.

The invention as it is conceived enables multiple advantages to be attained.

## Claims

1. A method of machining a key comprising the steps of:
i) positioning a key (7) to be machined in a self-centring vice (2) comprising a first and a second jaw (21, 22);
ii) shaping the profile of the key (7);
**characterized in that** the step of positioning the key (7) to be machined in the self-centring vice (2) comprises the step of clamping a first portion (70) of the key (7) between the first and second jaws (21, 22), by simultaneously moving the first and second jaws (21, 22) nearer along a first direction (4) as to:
- position a first and a second face (701, 702) of said first portion (70) of the key in contact, respectively, with a first and a second face (211, 212) of the first jaw (21); the first and second faces (701, 702) of the first portion (70) being reciprocally transverse;
- position a third and a fourth face (703, 704) of said first portion (70) in contact, respectively, with a first and a second face (221, 222) of the second jaw (22); the third and the fourth face (703, 704) of the first portion (70) being reciprocally transverse;
said first direction (4) forming a non-zero acute angle with both the first and second faces (211, 212) of the first jaw (21) and the first and second faces (221, 222) of the second jaw (22);
the steps of positioning a first and a second face (701, 702) of said first portion (70) of the key in contact, respectively, with a first and a second face (211, 212) of the first jaw (21) and of positioning a third and a fourth face (703, 704) of said first portion (70) in contact, respectively, with a first and a second face (221, 222) of the second jaw (22) imply that:
* along a first part (95) of the longitudinal extent of the key, the first and second faces (211, 212) of the first jaw (21) and the first and second faces (221, 222) of the second jaw (22) hold the key (7) at two opposite edges of said first portion (70) of the key;
* along a second part (96) of the longitudinal extent of the key, the first and second faces (211, 212) of the first jaw (21) and the first and second faces (221, 222) of the second jaw (22) hold the key by overlapping at least 70% of the perimeter of a transverse section of the first portion (70) of the key.

2. The method according to claim 1, **characterized in that** said first direction (4) forms a non-zero acute angle with a horizontal plane (40).

3. The method according to claim 1, 2, **characterized in that** the first portion (70) of the key is substantially parallelepiped, the first and second faces (211, 212) of the first jaw (21) being fashioned, respectively, on two orthogonal areas of a first angled portion (210) of the first jaw (21); the first and second areas (221, 222) of the second jaw (22) being fashioned, respectively, on two orthogonal areas of a second angled portion (220), said second angled portion (220) being fashioned on the second jaw (22).

4. The method according to any one of claims 1 to 3, **characterized in that** it comprises a step of setting the subsequent step of shaping the profile of the key, said setting step comprising the step of rotating a support head (5) of the first and second jaws (21, 22), the first and second jaws (21, 22) sliding along guide means present on the support head (5).

5. The method according to any one of claims 1 to 4, **characterized in that** during said step of positioning the key to be machined in the self-centring vice (2), the insertion of the key in the vice (2) is detected by a sensor, this enabling the step of shaping the profile of the key.

6. The method according to claim 5, **characterized in that** the step of positioning a key to be machined in a self-centring vice (2) induces a push on said sensor by one end of the key (7), this bringing about:
- a retreat of said sensor so as not to be an obstacle in the subsequent step of shaping the profile of the key;
- an enabling of the step of shaping the profile of the key.

7. An apparatus for machining a key comprising:
i) a self-centring vice (2) for the key in turn comprising a first jaw (21) and a second jaw (22) which cooperate to hold the key in position;
ii) a means (3) for shaping the profile of the key;
**characterized in that** the first jaw (21) comprises a first and a second face (211, 212) for positioning the key which respectively identify a first and a second reciprocally transverse imaginary plane; the second jaw (22) comprising a first and a second face (221, 222) for positioning the key which respectively identify a third and a fourth reciprocally transverse imaginary plane;
the first and second jaws (21, 22) being able to be simultaneously moved nearer along a first direction (4) which forms a non-zero acute angle with the first, second, third and fourth imaginary planes;
the first and second jaws (21, 22) comprising a first and a second part intended to extend along a longitudinal extent of the key;
as compared to the first part, in the second part the first and second faces (211, 212) of the first jaw (21) and the first and second faces (221, 222) of the second jaw (22) being designed to overlap the perimeter of corresponding transverse sections of the key to a greater extent; in said first part, the first and second jaws holding the key only at two opposite edges thereof;
in the second portion the first and second jaws (21, 22) each comprising a pair of orthogonal tabs intended to wrap around at least 70% of the key improving the hold and preventing it from flipping over.

8. The apparatus according to claim 7, **characterized in that** the first jaw (21) comprises a first angled portion (210) in turn comprising the first and second faces (211, 212) for positioning the key;
the second jaw (22) comprising a second angled portion (220) in turn comprising the first and second faces (221, 222) for positioning the key.

9. The apparatus according to claim 8, **characterized in that**:
the first and second angled portions (210, 220) respectively define a first and a second concavity (213, 223); the first concavity (213) being turned towards the second angled portion (220) and the second concavity (223) being turned towards the first angled portion (210).

10. The apparatus according to any one of claims 7 to 9, **characterized in that** the self-centring vice (2) is a vice with only two jaws.

11. The apparatus according to any one of claims 7 to 10, **characterized in that** it comprises a support head (5) for supporting the first and second jaws (21, 22); the support head (5) is rotatable about a horizontal rotation axis (50) which is orthogonal to the first direction (4); the first and second jaws (21, 22) being removably connected to the support head (5).

12. The apparatus according to any one of claims 7 to 11, **characterized in that** it comprises a feeler (6) for detecting the insertion of the key in the self-centring vice (2) and activating at least a part of the means (3) for shaping the key.

13. The apparatus according to claim 12, **characterized in that** said feeler (6) is movable between:
- a first position of waiting for the key to be machined;
- a second retracted position, assumed upon the positioning of the key to be machined in the self-centring vice (2); in the second position the feeler (6) being pushed by the key;
- a third position further retracted position in order not to obstruct the action of the means (3) for shaping the key;
the movement of the feeler (6) between the first, second and third positions takes place along a first straight line (52).

## Patentansprüche

1. Verfahren zur Bearbeitung eines Schlüssels, das die folgenden Schritte umfasst:
i) Positionieren eines zu bearbeitenden Schlüssels (7) in einem selbstzentrierenden Schraubstock (2), der eine erste und eine zweite Backe (21, 22) umfasst;
ii) Formen des Profils des Schlüssels (7);
**dadurch gekennzeichnet, dass** der Schritt zum Positionieren des zu bearbeitenden Schlüssels (7) in dem selbstzentrierenden Schraubstock (2) den Schritt zum Einspannen eines ersten Abschnitts (70) des Schlüssels (7) zwischen der ersten und der zweiten Backe (21, 22) umfasst, indem gleichzeitig die erste und die zweite Backe (21, 22) näher entlang einer ersten Richtung (4) bewegt werden, zum:
- Positionieren einer ersten und einer zweiten Fläche (701, 702) des ersten Abschnitts (70) des Schlüssels in Kontakt mit jeweils einer ersten und einer zweiten Fläche (211, 212) der ersten Backe (21); wobei die erste und die zweite Fläche (701, 702) des ersten Abschnitts (70) zueinander quer verlaufen;
- Positionieren einer dritten und einer vierten Fläche (703, 704) des ersten Abschnitts (70) in Kontakt mit jeweils einer ersten und einer zweiten Fläche (221, 222) der zweiten Backe (22); wobei die dritte und die vierte Fläche (703, 704) des ersten Abschnitts (70) zueinander quer verlaufen;
wobei die erste Richtung (4) einen spitzen Winkel ungleich Null mit sowohl der ersten als auch der zweiten Fläche (211, 212) der ersten Backe (21) und der ersten und der zweiten Fläche (221, 222) der zweiten Backe (22) bildet;
die Schritte zum Positionieren einer ersten und einer zweiten Fläche (701, 702) des ersten Abschnitts (70) des Schlüssels in Kontakt mit jeweils einer ersten und einer zweiten Fläche (211, 212) der ersten Backe (21) und zum Positionieren einer dritten und einer vierten Fläche (703, 704) des ersten Abschnitts (70) in Kontakt mit jeweils einer ersten und einer zweiten Fläche (221, 222) der zweiten Backe (22) implizieren, dass:
* entlang eines ersten Teils (95) der Längserstreckung des Schlüssels die erste und zweite Fläche (211, 212) der ersten Backe (21) und die erste und zweite Fläche (221, 222) der zweiten Backe (22) den Schlüssel (7) an zwei gegenüberliegenden Kanten des ersten Abschnitts (70) des Schlüssels halten;
* entlang eines zweiten Teils (96) der Längserstreckung des Schlüssels die erste und zweite Fläche (211, 212) der ersten Backe (21) und die erste und zweite Fläche (221, 222) der zweiten Backe (22) den Schlüssel durch Überlappen von mindestens 70 % des Umfangs eines Querschnitts des ersten Abschnitts (70) des Schlüssels halten.

2. Verfahren nach Anspruch 1, **dadurch gekennzeichnet, dass** die erste Richtung (4) einen spitzen Winkel ungleich Null mit einer horizontalen Ebene (40) bildet.

3. Verfahren nach Anspruch 1, 2, **dadurch gekennzeichnet, dass** der erste Abschnitt (70) des Schlüssels im Wesentlichen quaderförmig ist, wobei die erste und zweite Fläche (211, 212) der ersten Backe (21) jeweils an zwei orthogonalen Bereichen eines ersten abgewinkelten Abschnitts (210) der ersten Backe (21) ausgebildet sind; wobei der erste und zweite Bereich (221, 222) der zweiten Backe (22) jeweils an zwei orthogonalen Bereichen eines zweiten abgewinkelten Abschnitts (220) ausgebildet sind, wobei der zweite abgewinkelte Abschnitt (220) an der zweiten Backe (22) ausgebildet ist.

4. Verfahren nach einem der Ansprüche 1 bis 3, **dadurch gekennzeichnet, dass** es einen Schritt zum Einstellen des nachfolgenden Schritts zum Formen des Profils des Schlüssels umfasst, wobei der Einstellschritt den Schritt zum Drehen eines Stützkopfs (5) der ersten und zweiten Backe (21, 22) umfasst, wobei die erste und zweite Backe (21, 22) entlang von Führungsmitteln gleiten, die an dem Stützkopf (5) vorhanden sind.

5. Verfahren nach einem der Ansprüche 1 bis 4, **dadurch gekennzeichnet, dass** während des Schrittes zum Positionieren des zu bearbeitenden Schlüssels in dem selbstzentrierenden Schraubstock (2) das Einführen des Schlüssels in den Schraubstock (2) durch einen Sensor erfasst wird, wodurch der Schritt zum Formen des Profils des Schlüssels ermöglicht wird.

6. Verfahren nach Anspruch 5, **dadurch gekennzeichnet, dass** der Schritt zum Positionieren eines zu bearbeitenden Schlüssels in einem selbstzentrierenden Schraubstock (2) einen Druck auf den Sensor durch ein Ende des Schlüssels (7) induziert, was herbeiführt:
- ein Zurückziehen des Sensors, um kein Hindernis im nachfolgenden Schritt zum Formen des Profils des Schlüssels zu sein;
- eine Ermöglichung des Schritts zum Formen des Profils des Schlüssels.

7. Vorrichtung zur Bearbeitung eines Schlüssels, umfassend:
i) einen selbstzentrierenden Schraubstock (2) für den Schlüssel, der wiederum eine erste Backe (21) und eine zweite Backe (22) umfasst, die zusammenwirken, um den Schlüssel in Position zu halten;
ii) Mittel (3) zum Formen des Profils des Schlüssels;
**dadurch gekennzeichnet, dass** die erste Backe (21) eine erste und eine zweite Fläche (211, 212) zum Positionieren des Schlüssels umfasst, die jeweils eine erste und eine zweite imaginäre Querebene identifizieren; wobei die zweite Backe (22) eine erste und eine zweite Fläche (221, 222) zum Positionieren des Schlüssels umfasst, die jeweils eine dritte und eine vierte imaginäre Querebene identifizieren;
wobei die erste und zweite Backe (21, 22) gleichzeitig näher entlang einer ersten Richtung (4) bewegt werden können, die einen spitzen Winkel ungleich Null mit der ersten, zweiten, dritten und vierten imaginären Ebene bildet;
wobei die erste und zweite Backe (21, 22) einen ersten und einen zweiten Teil umfassen, die dazu bestimmt sind, sich entlang einer Längserstreckung des Schlüssels zu erstrecken;
im Vergleich zu dem ersten Teil sind in dem zweiten Teil die erste und zweite Fläche (211, 212) der ersten Backe (21) und die erste und zweite Fläche (221, 222) der zweiten Backe (22) so ausgelegt, dass sie den Umfang entsprechender Querabschnitte des Schlüssels in größerem Maße überlappen; in dem ersten Teil halten die erste und zweite Backe den Schlüssel nur an zwei gegenüberliegenden Kanten davon;
in dem zweiten Abschnitt umfassen die erste und die zweite Backe (21, 22) jeweils ein Paar orthogonaler Laschen, die dazu bestimmt sind, sich um mindestens 70 % des Schlüssels zu wickeln, wodurch der Halt verbessert und verhindert wird, dass er umgedreht wird.

8. Vorrichtung nach Anspruch 7, **dadurch gekennzeichnet, dass** die erste Backe (21) einen ersten abgewinkelten Abschnitt (210) umfasst, der wiederum die erste und zweite Fläche (211, 212) zum Positionieren des Schlüssels umfasst;
wobei die zweite Backe (22) einen zweiten abgewinkelten Abschnitt (220) umfasst, der wiederum die erste und zweite Fläche (221, 222) zum Positionieren des Schlüssels umfasst.

9. Vorrichtung nach Anspruch 8, **dadurch gekennzeichnet, dass**:
der erste und der zweite abgewinkelte Abschnitt (210, 220) jeweils eine erste und eine zweite Konkavität (213, 223) definieren; wobei die erste Konkavität (213) dem zweiten abgewinkelten Abschnitt (220) zugewandt ist und die zweite Konkavität (223) dem ersten abgewinkelten Abschnitt (210) zugewandt ist.

10. Vorrichtung nach einem der Ansprüche 7 bis 9, **dadurch gekennzeichnet, dass** es sich beim selbstzentrierenden Schraubstock (2) um einen Schraubstock mit nur zwei Backen handelt.

11. Vorrichtung nach einem der Ansprüche 7 bis 10, **dadurch gekennzeichnet, dass** sie einen Stützkopf (5) zum Stützen der ersten und zweiten Backen (21, 22) umfasst; wobei der Stützkopf (5) um eine horizontale Drehachse (50) drehbar ist, die orthogonal zu der ersten Richtung (4) verläuft; wobei die erste und zweite Backe (21, 22) entfernbar mit dem Stützkopf (5) verbunden sind.

12. Vorrichtung nach einem der Ansprüche 7 bis 11, **dadurch gekennzeichnet, dass** sie einen Fühler (6) zum Erfassen des Einführens des Schlüssels in den selbstzentrierenden Schraubstock (2) und zum Aktivieren zumindest eines Teils der Mittel (3) zum Formen des Schlüssels umfasst.

13. Vorrichtung nach Anspruch 12, **dadurch gekennzeichnet, dass** der Fühler (6) beweglich ist zwischen:
- einer ersten Warteposition für die Bearbeitung des Schlüssels;
- einer zweiten zurückgezogenen Position, die bei der Positionierung des zu bearbeitenden Schlüssels in dem selbstzentrierenden Schraubstock (2) eingenommen wird; in der zweiten Position wird der Fühler (6) durch den Schlüssel gedrückt;
- einer dritten Position, die weiter zurückgezogen ist, um die Wirkung der Mittel (3) zum Formen des Schlüssels nicht zu behindern;
die Bewegung des Fühlers (6) zwischen der ersten, zweiten und dritten Position entlang einer ersten Geraden (52) erfolgt.

## Revendications

1. Procédé d'usinage de clé, comprenant les étapes de :
i) positionner une clé (7) à usiner dans un étau auto-centrant (2) comprenant une première et une deuxième mâchoire (21, 22) ;
ii) façonner le profil de la clé (7) ;
**caractérisé en ce que** l'étape de positionnement de la clé (7) à usiner dans l'étau auto-centrant (2) comprend l'étape de serrage d'une première partie (70) de la clé (7) entre les première et deuxième mâchoires (21, 22), en rapprochant simultanément les première et deuxième mâchoires (21, 22) le long d'une première direction (4) de manière à :
- positionner une première et une deuxième face (701, 702) de ladite première partie (70) de la clé en contact, respectivement, avec une première et une deuxième face (211, 212) de la première mâchoire (21) ; les première et deuxième faces (701, 702) de la première partie (70) étant réciproquement transversales ;
- positionner une troisième et une quatrième face (703, 704) de ladite première partie (70) en contact, respectivement, avec une première et une deuxième face (221, 222) de la deuxième mâchoire (22) ; la troisième et la quatrième face (703, 704) de la première partie (70) étant réciproquement transversales ;
ladite première direction (4) formant un angle aigu non nul avec les première et deuxième faces (211, 212) de la première mâchoire (21) et les première et deuxième faces (221, 222) de la deuxième mâchoire (22) ;
les étapes de positionnement d'une première et d'une deuxième face (701, 702) de ladite première partie (70) de la clé en contact, respectivement, avec une première et une deuxième face (211, 212) de la première mâchoire (21) et de positionnement d'une troisième et d'une quatrième face (703, 704) de ladite première partie (70) en contact, respectivement, avec une première et une deuxième face (221, 222) de la deuxième mâchoire (22) impliquent que :
* le long d'une première partie (95) de l'étendue longitudinale de la clé, les première et deuxième faces (211, 212) de la première mâchoire (21) et les première et deuxième faces (221, 222) de la deuxième mâchoire (22) maintiennent la clé (7) en correspondance de deux bords opposés de ladite première partie (70) de la clé ;
* le long d'une deuxième partie (96) de l'étendue longitudinale de la clé, les première et deuxième faces (211, 212) de la première mâchoire (21) et les première et deuxième faces (221, 222) de la deuxième mâchoire (22) maintiennent la clé en chevauchant au moins 70 % du périmètre d'une section transversale de la première partie (70) de la clé.

2. Procédé selon la revendication 1, **caractérisé en ce que** ladite première direction (4) forme un angle aigu non nul avec un plan horizontal (40).

3. Procédé selon la revendication 1, 2, **caractérisé en ce que** la première partie (70) de la clé est essentiellement parallélépipédique, les première et deuxième faces (211, 212) de la première mâchoire (21) étant façonnées, respectivement, sur deux zones orthogonales d'une première partie angulaire (210) de la première mâchoire (21) ; les première et deuxième zones (221, 222) de la deuxième mâchoire (22) étant façonnées, respectivement, sur deux zones orthogonales d'une deuxième partie angulaire (220), ladite deuxième partie angulaire (220) étant façonnée sur la deuxième mâchoire (22) .

4. Procédé selon l'une quelconque des revendications 1 à 3, **caractérisé en ce qu'**il comprend une étape de réglage de l'étape ultérieure de façonnage du profil de la clé, ladite étape de réglage comprenant l'étape consistant à faire tourner une tête de support (5) des première et deuxième mâchoires (21, 22), les première et deuxième mâchoires (21, 22) coulissant le long de moyens de guidage présents sur la tête de support (5).

5. Procédé selon l'une quelconque des revendications 1 à 4, **caractérisé en ce que** lors de ladite étape de positionnement de la clé à usiner dans l'étau auto-centrant (2), l'insertion de la clé dans l'étau (2) est détectée par un capteur, ceci activant l'étape de façonnage du profil de la clé.

6. Procédé selon la revendication 5, **caractérisé en ce que** l'étape de positionnement d'une clé à usiner dans un étau auto-centrant (2) induit une poussée sur ledit capteur par une extrémité de la clé (7), ce qui entraîne :
- un recul dudit capteur pour ne pas être un obstacle dans l'étape suivante de façonnage du profil de la clé ;
- une activation de l'étape de façonnage du profil de la clé.

7. Appareil pour l'usinage de clé, comprenant :
i) un étau auto-centrant (2) pour la clé comprenant à son tour une première mâchoire (21) et une deuxième mâchoire (22) qui coopèrent pour maintenir la clé en position ;
ii) des moyens (3) pour façonner le profil de la clé ; **caractérisé en ce que** la première mâchoire (21) comprend une première et une deuxième face (211, 212) de positionnement de la clé qui identifient, respectivement, un premier et un deuxième plan imaginaire réciproquement transversaux ; la deuxième mâchoire (22) comprenant une première et une deuxième face (221, 222) de positionnement de la clé qui identifient respectivement un troisième et un quatrième plan imaginaire réciproquement transversaux ;
les première et deuxième mâchoires (21, 22) pouvant être rapprochées simultanément le long d'une première direction (4) qui forme un angle aigu non nul avec les premier, deuxième, troisième et quatrième plans imaginaires ;
les première et deuxième mâchoires (21, 22) comprenant une première et une deuxième partie prévues pour se prolonger le long d'une étendue longitudinale de la clé ; par rapport à la première partie, dans la deuxième partie, les première et deuxième faces (211, 212) de la première mâchoire (21) et les première et deuxième faces (221, 222) de la deuxième mâchoire (22) sont conçues pour chevaucher dans une plus large mesure le périmètre des sections transversales correspondantes de la clé ; dans ladite première partie, les première et deuxième mâchoires ne maintiennent la clé qu'en correspondance de deux de ses bords opposés ;
dans la deuxième partie, les première et deuxième mâchoires (21, 22) comprenant chacune une paire de languettes orthogonales prévues pour envelopper au moins 70 % de la clé pour en améliorer le maintien et l'empêcher de se retourner.

8. Appareil selon la revendication 7, **caractérisé en ce que** la première mâchoire (21) comprend une première partie angulaire (210) comprenant à son tour les première et deuxième faces (211, 212) pour le positionnement de la clé ;
la deuxième mâchoire (22) comprenant une deuxième partie angulaire (220) comprenant à son tour les première et deuxième faces (221, 222) pour le positionnement de la clé.

9. Appareil selon la revendication 8, **caractérisé en ce que** :
les première et deuxième parties angulaires (210, 220) définissent respectivement une première et une deuxième concavité (213, 223) ; la première concavité (213) étant tournée vers la deuxième partie angulaire (220) et la deuxième concavité (223) étant tournée vers la première partie angulaire (210).

10. Appareil selon l'une quelconque des revendications 7 à 9, **caractérisé en ce que** l'étau auto-centrant (2) est un étau à deux mâchoires seulement.

11. Appareil selon l'une quelconque des revendications 7 à 10, **caractérisé en ce qu'**il comprend une tête de support (5) pour supporter les première et deuxième mâchoires (21, 22) ; la tête de support (5) est rotative autour d'un axe de rotation horizontal (50) qui est orthogonal à la première direction (4) ; les première et deuxième mâchoires (21, 22) étant reliées de manière amovible à la tête de support (5).

12. Appareil selon l'une quelconque des revendications 7 à 11, **caractérisé en ce qu'**il comprend un tâteur (6) pour détecter l'insertion de la clé dans l'étau auto-centrant (2) et activer au moins une partie des moyens (3) de façonnage de la clé.

13. Appareil selon la revendication 12, **caractérisé en ce que** ledit tâteur (6) est mobile entre :
- une première position d'attente de la clé à usiner ;
- une deuxième position rétractée, prise lors du positionnement de la clé à usiner dans l'étau auto-centrant (2) ; dans la deuxième position, le tâteur (6) étant poussé par la clé ;
- une troisième position encore plus rétractée pour ne pas gêner l'action des moyens (3) de façonnage de la clé ;
le déplacement du tâteur (6) entre les première, deuxième et troisième positions s'effectue le long d'une première ligne rectiligne (52).
